# EUROPÄISCHE PATENTSCHRIFT

(11) **EP 1 020 654 B1**
(45) Veröffentlichungstag und Bekanntmachung des Hinweises auf die Patenterteilung: **06.10.2004**
(21) Anmeldenummer: 99124882.4
(22) Anmeldetag: 16.12.1999
(51) Int. Cl.: F16C 19/52, F16C 25/08

(54) **Wellenlageranordnung mit Spielausgleich**
Axle bearing device with lash adjustment
Dispositif de palier d'axe avec rattrapage de jeu

(30) Priorität: 16.01.1999 DE 19901562
(43) Veröffentlichungstag der Anmeldung: 19.07.2000
(73) Patentinhaber: Siemens Aktiengesellschaft, 80333 München (DE)
(72) Erfinder: Bachnak, Nouhad, 60326 Frankfurt am Main (DE)

(56) Entgegenhaltungen:
- DE-A- 4 118 933
- DE-B- 1 221 078
- DE-U- 29 603 579
- GB-A- 2 317 504
- US-A- 4 279 451

## Beschreibung

Die Erfindung betrifft eine Wellenlageranordnung mit einer Welle, die in einem Gehäuse über zwei Wälzlager gelagert ist, die axial zwischen Anschlägen abgestützt sind, deren Abstand relativ zueinander verstellbar ist, wobei wenigstens ein axialer Anschlag an einem Temperaturdehnelement ausgebildet ist und bei einer Temperaturänderung seine axiale Lage bezüglich des Gehäuses der Längendehnungsdifferenz zwischen der Welle und dem Gehäuse entgegengerichtet in der Weise ändert, daß das Lagerspiel über einen bestimmten Temperaturbereich im wesentlichen konstant bleibt.

Eine derartige Wellenlagerung mit Spielausgleich ist aus der DE-A-41 18 933 bekannt, wobei das Temperaturdehnelement aus einem axial beweglichen Element mit einem von der Welle wegweisenden Innenkonus und einem gehäusesitig festlegbaren Element mit einem Außenkonus besteht, der an dem Innenkonus anliegt. Die beiden das Temperaturelement bildenden Elemente weisen unterschiedliche Wärmeausdehnungskoeffizienten auf.

In vielen Anwendungsfällen bestehen die die Lageraußenringe aufnehmenden Gehäuse aus Aluminium, während Wellen gewöhnlich aus Stahl hergestellt werden. Wird das Lagerspiel bei einer derartigen Wellenlageranordnung bei einer Raumtemperatur von ca. 20° C auf Null eingestellt, so ist aufgrund des bei Aluminium ungefähr doppelt so großen Wärmekoeffizienten bei Temperaturschwankungen mit einer unerwünschten Änderung des Lagerspiels zu rechnen. So führt bei Minustemperaturen, die beispielsweise im Fahrzeugbereich ohne weiteres bis zu - 40° C betragen können, die größere negative Längenwärmeausdehnung des Gehäuses gegenüber der negativen Längenwärmeausdehnung der Welle dazu, daß die Lageraußenringe die Wälzkörper mit erheblichen Axialkräften beaufschlagt werden. Dies hat eine erhöhte Reibung der Wälzlager zur Folge, und unter Umständen kann es zu einer Beschädigung der Lager im Betrieb kommen, insbesondere wenn sich axial wirkende Betriebskräfte zu den durch die unterschiedlichen Wärmedehnungen erzeugten Axialkräften hinzuaddieren. Um die Wälzlager von solchen erhöhten, durch thermische Einflüsse entstehenden Axialkräften freizuhalten, muß die Differenz der unterschiedlichen Längenänderungen zwischen Gehäuse und Welle als Spiel vorgehalten werden. Dieses vorgehaltene Spiel, das aufgrund der unterschiedlichen Wärmeausdehnungskoeffizienten wird bei hohen Temperaturen, die im Fahrzeugbereich bis 80° C und sogar darüber betragen können, noch größer. Ein derartiges Axialspiel der Wellenlagerung macht sich jedoch bei einem Wechsel der Lastrichtung als Stoß bemerkbar, der den Komfort beeinträchtigt und mit der Zeit zu Beschädigungen oder einer weiteren Vergrößerung des Axialspiels führen kann.

Es sind auch bereits Lösungen bekannt, bei welchen die Lageraußenringe mit Hilfe von elastischen Elementen, zum Beispiel Gummielementen, vorgespannt sind. Das Vorspannen der Lageraußenringe hat jedoch eine erhöhte Lagerreibung zur Folge, die beispielsweise bei Lenkgetrieben bei niedrigen Temperaturen das vollständige Zurückstellen der Fahrzeugräder in die Mittellage verhindern kann. Auch können elastische Elemente einem Verschleiß unterliegen, der im Laufe des Betriebes wiederum zu einem erhöhten Axialspiel in der Wellenlagerung führt.

Die Aufgabe der Erfindung besteht darin, eine Wellenlageranordnung zu schaffen, deren Axialspannung ohne Vorspannung über einen großen Temperaturbereich im wesentlichen gleich Null bleibt.

Erfindungsgemäß wird die Aufgabe dadurch gelöst, daß das Temperaturdehnelement als Bimetallelement ausgeführt ist.

Bei der erfindungsgemäßen Wellenlageranordnung wird das Lagerspiel bei Raumtemperatur oder einer sonstigen, beliebigen Temperatur auf Null eingestellt, und bei Temperaturschwankungen sorgt das Temperaturdehnelement für eine Kompensation des sich durch die unterschiedliche Längendehnung des Gehäuses und der Welle ändernden Axialspiels. Das Temperaturdehnungsverhalten des Temperaturdehnelements ist dabei auf die Geometrie der Wellenlageranordnung abgestimmt, das heißt bei großen zu erwartenden Differenzen, wie sie beispielsweise bei einem großen axialen Lagerabstand zu erwarten sind, muß auch das Temperaturdehnelement entsprechend große Dehnwerte bereithalten. Im Falle besonders großer zu erwartender Dehnungsdifferenzen zwischen Gehäuse und Welle können auch beide axialen Anschläge an Temperaturdehnelementen ausgebildet sein, wodurch sich entsprechend eine Kompensation des doppelten Wertes einer Längendehnung gegenüber einem einzelnen, vergleichbaren Temperaturdehnelement erreichen läßt.

Das Temperaturdehnelement ist als Bimetallelement ausgeführt. Entsprechend der Funktion bekannter Bimetallelemente ändert sich dabei die Lage des axialen Anschlags in Abhängigkeit von der Temperatur durch das unterschiedliche Dehnverhalten der beiden Werkstoffe. Selbstverständlich muß das Bimetallelement so dimensioniert sein, daß es die im Betrieb auftretenden Axialkräfte auf das Gehäuse übertragen kann.

Einen besonders bevorzugten Anwendungsfall der erfindungsgemäßen Wellenlageranordnung stellt die Einbausituation einer elektrischen Lenkhilfe dar, bei welcher die Welle die Antriebswelle der elektrischen Lenkhilfe ist und eine Schnecke trägt. Gerade bei diesem Anwendungsbeispiel sind erhebliche Temperaturdifferenzen zu erwarten, und das Schneckengetriebe reagiert empfindlich auf erhöhte Lagerreibwerte, die das Zurückstellen der Lenkung in die Mittellage erschweren können, so daß bei diesem Anwendungsbeispiel die Vorteile der erfindungsgemäßen Wellenlageranordnung besonders in Erscheinung treten.

Nachfolgend wird zum allgemeinen Verständnis und der Bedeutung der Erfindung anhand der beigefügten Zeichnungen näher auf Ausführungsbeispiele eingegangen, die nicht sämtliche Merkmale des Anspruchs 1 zeigen.

Es zeigen:
- Figur 1:: einen Längsschnitt einer Antriebswelle einer elektrischen Lenkhilfe,
- Figur 2:: eine Ausschnittsvergrößerung aus Figur 1,
- Figur 3:: einen Schnitt entsprechend Figur 2 einer weiteren Ausführungsform,
- Figur 4:: einen Schnitt einer noch weiteren Ausführungsform.

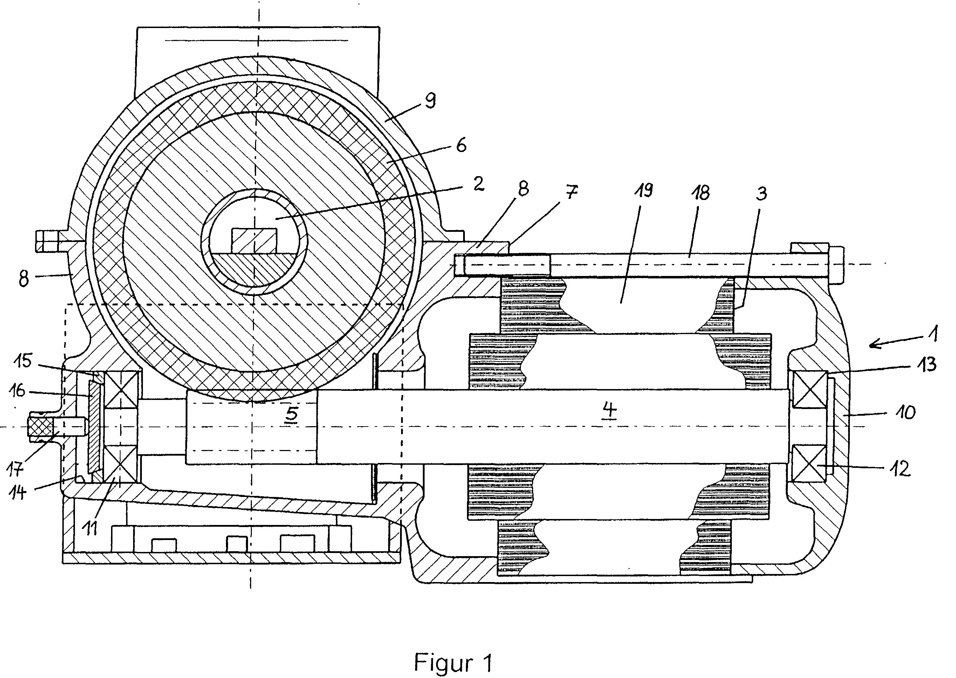

Figur 1 zeigt einen Längsschnitt einer elektrischen Lenkhilfe 1, die zur Unterstützung der Lenkbewegung an der Lenksäule 2 eines Fahrzeuges sitzt. Die elektrische Lenkhilfe 1 besitzt einen elektrischen Antriebsmotor 3, dessen Rotor auf einer Antriebswelle 4 sitzt, die mit einer Schnecke 5 versehen ist. Die Schnecke 5 steht mit einem Schneckenrad 6 in Eingriff, das drehstarr mit der Lenksäule 2 verbunden ist. Die Schnecke 5 ist bei dem abgebildeten Ausführungsbeispiel unmittelbar aus der Antriebswelle 4 herausgearbeitet, kann jedoch auch als separates Teil drehstarr mit dieser verbunden sein.

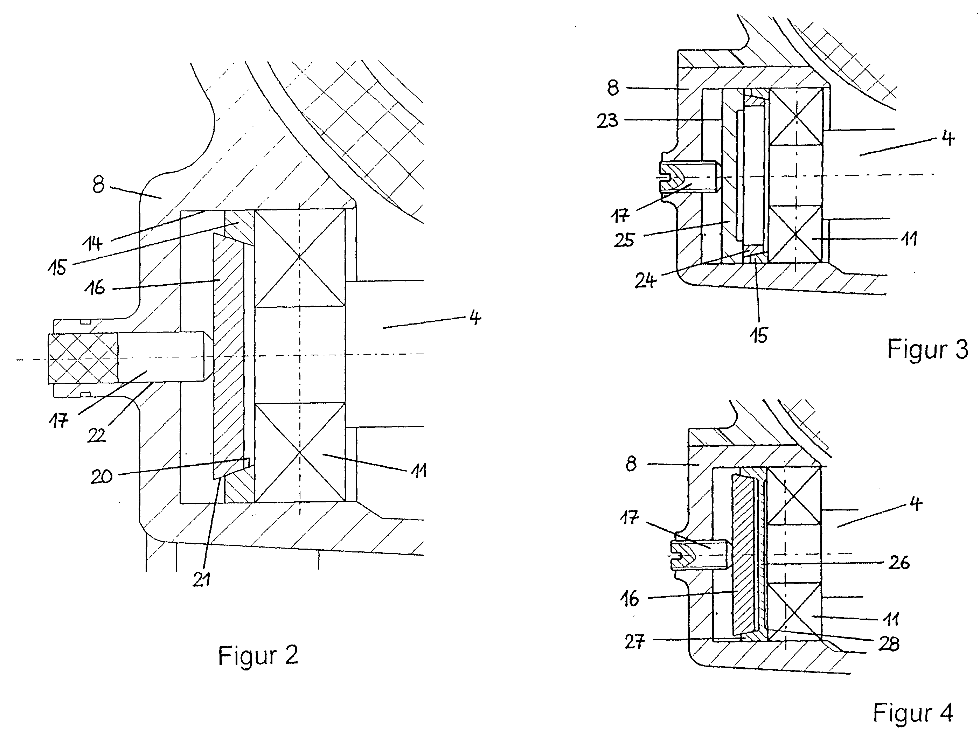

Die elektrische Lenkhilfe 1 verfügt über ein Gehäuse 7, das aus einem Gehäusekörper 8, einem Getriebedeckel 9 und einem Motordeckel 10 besteht. Die Antriebswelle 4 ist mit Hilfe eines ersten Wälzlagers 11 in dem Gehäusekörper 8 und mit Hilfe eines zweiten Wälzlagers 12 in dem Motordecke 10 gelagert. Die Innenringe der Wälzlager 11, 12 stützen sich an Absätzen an der Antriebswelle 4 ab, während der Außenring des zweiten Wälzlagers 12 an einem axialen Anschlag 13 an dem Motordeckel 10 axial abgestützt ist (siehe auch Figur 2). Der Außenring des ersten Wälzlagers 11 ist nicht unmittelbar an dem Gehäusekörper 8 abgestützt, sondern in einer zylindrischen Führungsbohrung 14 axial verschieblich geführt. Die axiale Abstützung des Wälzlagers 11 erfolgt über ein ebenfalls axial verschieblich in der zylindrischen Führungsbohrung 14 geführtes Stützelement 15, das mit einem Innenkonus 20 versehen ist, der von dem ersten Wälzlager 11 wegweist. Der Innenkonus 20 liegt an einem Außenkonus 21 mit gleichem Steigungswinkel an, der eine Umfangsfläche eines Druckelements 16 bildet. Das Druckelement 16 wiederum ist axial an einem Gewindestift 17 abgestützt, der verstellbar in einer Gewindebohrung 22 in dem Gehäusekörper 8 zentrisch angeordnet ist. Sicherungselemente (nicht gezeigt) erlauben das drehstarre Festlegen des Gewindestifts in dem Gehäusekörper 8.

Das Druckelement 16 besteht ebenso wie das Gehäuse 7 aus Aluminium, während das Stützelement 15 und die Antriebswelle 4 aus Stahl gefertigt sind.

Bei der Montage der elektrischen Lenkhilfe 1 werden zunächst der Gewindestift 17, das Druckelement 16 und das Stützelement 15 in einer axialen Stellung in den Gehäusekörper 8 eingesetzt, die in jedem Fall ein ausreichendes Spiel zuläßt. Anschließend wird die Antriebswelle 4 mit dem ersten Wälzlager 11 in die zylindrische Führungsbohrung 14 eingeschoben und abschließend der Motordeckel 10 über den Außenring des zweiten Wälzlagers 12 geschoben und mit Hilfe von Befestigungsschrauben 18 gegen den Gehäusekörper 8 verschraubt. Dabei wird auch der Stator 19 des elektrischen Antriebsmotors 3 zwischen dem Gehäusekörper 8 und dem Motordeckel 10 axial festgelegt. Abschließend wird durch Verdrehen des Gewindestifts 17 das Druckelement 16 zugestellt, bis sich das über die Konusse 20, 21 mitgenommene Stützelement 15 an den Außenring des ersten Wälzlagers 11 anlegt. In dieser Stellung, in der das axiale Lagerspiel Null ist, wird der Gewindestift 17 arretiert, ohne daß axiale Vorspannkräfte auf die Wälzlager 11, 12 ausgeübt werden.

Aufgrund der unterschiedlichen Wärmeausdehnungskoeffizienten von Aluminium und Stahl kommt es bei Temperaturschwankungen zu unterschiedlichen Längenänderungen des Gehäuses 7 und der Welle 4.

Aufgrund der axial festen Abstützung des zweiten Wälzlagers 12 an dem axialen Anschlag 13 des Motordeckels 10 kommt es dabei zu einer axialen Verlagerung des ersten Wälzlagers 11, wobei sich das Wälzlager 11 bei sehr niedrigen Temperaturen, die bis zu - 40° C in nordischen Ländern betragen können, in Richtung des Druckelements 16 bewegt, da das Gehäuse 7 stärker schrumpft als die Welle 4. Umgekehrt entfernt sich das erste Wälzlager 11 axial von der Wand des Gehäuses 7, wenn die Temperaturen im Vergleich zu der Temperatur, bei der das Lagerspiel auf Null eingestellt worden ist, zurückgehen.

Diese axiale Lageänderung kann jedoch nicht zu einem Verspannen der Wälzlager 11, 12 beziehungsweise zu einem erhöhten Axialspiel führen, weil das Druckelement 16 bei Temperaturänderungen einer unterschiedlichen radialen Längendehnung unterliegt wie das Stützelement 15 aus Stahl. Bei sehr niedrigen Temperaturen schrumpft das Druckelement 16 stärker als das Stützelement 15. Das dadurch entstehende Radialspiel zwischen dem Stützelement 15 und dem Druckelement 16 erlaubt aufgrund der beiden Konusse 20, 21 eine axiale Verlagerung des ersten Wälzlagers 11, wobei der Innenkonus 20 unverändert an dem Außenkonus 21 anliegt und lediglich eine tangentiale Gleitbewegung der konischen Flächen aufeinander auftritt.

Da die Wärmedehnungskoeffizienten temperaturunabhängig sind, bleiben die Quotienten der radialen Spieländerungen und der axialen Spieländerungen über den gesamten Temperaturbereich konstant. Um immer eine spielfreie Anlage des Stützelements 15 an dem Druckelement 16 zu erreichen, wird daher der Steigungswinkel der Konusse 20, 21 als Arkus-Tangens des temperaturunabhängigen Quotienten aus den radialen und den axialen Längendehnungsdifferenzen gewählt. Damit ist sichergestellt, daß das Lagerspiel über den gesamten Temperaturbereich konstant bleibt und es nicht zu Verspannungen kommen kann, die die Reibung erhöhen und das Rückstellen der Lenkung in die Mittellage erschweren könnten.

Zur Vermeidung einer Selbsthemmung zwischen den aufeinander gleitenden Konussen 20, 21 sollte der Winkel größer gewählt werden als der Arkus-Tangens des Reibwertes µ der Reibpaarung Innenkonus 20/Außenkonus 21. In Grenzfällen kann zwischen dem Gehäusekörper 8 und dem Stützelement 15 auch ein axial wirkendes elastisches Federelement vorgesehen sein, das bei einer Ausdehnung des Druckelements 16 bei einer Temperaturerhöhung die Axialbewegung des Stützelements 15 unterstützt.

Sind derart große axiale Längendehnungsdifferenzen zwischen dem Gehäuse 7 und der Antriebswelle 4 zu erwarten, daß der Steigungswinkel der Konusse 20, 21 unzulässig flach gewählt werden müßte, kann auch im Bereich des zweiten Wälzlagers 12 eine entsprechende Abstützung des Außenrings an einer konischen Außenfläche eines Druckelements mit einem hohen Wärmedehnungskoeffizienten erfolgen. Auch das Abstützen der Innenringe der beiden Wälzlager 11, 12 an wärmedehnungsabhängigen Absätzen auf der Antriebswelle 4 ist denkbar.

Die Ausbildung des Stützelements 15 und des Druckelements 16 kann variieren. Beispielhaft sei auf die in Figur 3 und Figur 4 dargestellten Ausführungsformen verwiesen. Bei der in Figur 3 dargestellten Ausführungsform ist das Druckelement 23 zweiteilig ausgebildet und besteht aus einem Druckring 24 aus Aluminium, auf dessen Umfang der Außenkonus 21 ausgebildet ist und einer Druckscheibe 25 aus Stahl, welche die axialen Betriebskräfte vom Druckring 24 auf den Gewindestift 17 weiterleitet. Der Vorteil dieser Ausführungsform besteht darin, daß aufgrund der höheren Festigkeitseigenschaften von Stahl die Druckscheibe 25 biegesteifer ist und daher hohe Axialkräfte verformungsfrei übertragen kann.

Eine weitere Ausführungsform des Wärmedehnungsausgleichs ist in Figur 4 dargestellt, bei welcher das Stützelement 26 nicht als Ring, sondern als massive Scheibe ausgebildet ist, wobei der erhöhte Randbereich 27 zum einen den Innenkonus 20 und zum anderen einen Stützring 28 bildet, der sich an den Außenring des ersten Wälzlagers 11 anlegt. Bei dieser Ausführungsform besitzt das Stützelement 26 eine größere Steifigkeit, die ein konstanteres Spielverhalten ermöglicht. Selbstverständlich sind weitere Ausführungsformen, beispielsweise die Kombination des Druckelements 23 mit dem Stützelement 26, denkbar.

Bei Wellenlageranordnungen, bei denen die Welle einen größeren Wärmedehnungskoeffizienten als das Gehäuse besitzt, kann in entsprechender Weise ein Wärmedehnungsausgleich dadurch geschaffen werden, daß das Druckelement einen kleineren Wärmedehnungskoeffizienten als das Stützelement besitzt.

### Bezugszeichenliste:

- 1.: Elektrische Lenkhilfe
- 2.: Lenksäule
- 3.: Antriebsmotor
- 4.: Antriebswelle
- 5.: Schnecke
- 6.: Schneckenrad
- 7.: Gehäuse
- 8.: Gehäusekörper
- 9.: Getriebedeckel
- 10.: Motordeckel
- 11.: Lager (Wälzlager)
- 12.: Lager (Wälzlager)
- 13.: Anschlag
- 14.: Führungsbohrung
- 15.: Temperaturdehnelement (Stützelement)
- 16.: Temperaturdehnelement (Druckelement)
- 17.: Gewindestift
- 18.: Befestigungsschraube
- 19.: Stator
- 20.: Konus (Innenkonus)
- 21.: Konus (Außenkonus)
- 22.: Gewindebohrung
- 23.: Druckelement
- 24.: Druckring
- 25.: Druckscheibe
- 26.: Stützelement
- 27.: Randbereich
- 28.: Stützring

## Patentansprüche

1. Wellenlageranordnung mit einer Welle, die in einem Gehäuse über zwei Wälzlager gelagert ist, die axial zwischen Anschlägen abgestützt sind, deren Abstand relativ zueinander verstellbar ist, wobei wenigstens ein axialer Anschlag an einem Temperaturdehnelement ausgebildet ist und bei einer Temperaturänderung seine axiale Lage bezüglich des Gehäuses der Längendehnungsdifferenz zwischen der Welle und dem Gehäuse entgegengerichtet in der Weise ändert, daß das Lagerspiel über einen bestimmten Temperaturbereich im wesentlichen konstant bleibt, **dadurch gekennzeichnet, daß** das Temperaturdehnelement als Bimetallelement ausgeführt ist.

2. Wellenlageranordnung nach Anspruch 1, **dadurch gekennzeichnet, daß** die Welle die Antriebswelle einer elektrischen Lenkhilfe ist und eine Schnecke trägt.

## Claims

1. Shaft bearing arrangement, with a shaft mounted in a housing via two rolling bearings which are supported axially between stops, of which the spacing in relation to one another is adjustable, at least one axial stop being formed on a thermal expansion element and, in the event of a temperature change, changing its axial position with respect to the housing counter to the difference in length expansion between the shaft and the housing, in such a way that the bearing play remains essentially constant over a defined temperature range, **characterized in that** the thermal expansion element is designed as a bimetal element.

2. Shaft bearing arrangement according to Claim 1, **characterized in that** the shaft is a drive shaft of an electrical steering aid and carries a worm.

## Revendications

1. Dispositif de palier d'arbre avec un arbre logé dans un boîtier au moyen de deux paliers à roulement, qui sont soutenus axialement entre deux butées, dont l'écartement relatif est réglable, au moins u ne butée axiale étant formée sur un élément de dilatation thermique et modifiant sa position axiale en sens opposé, par rapport au boîtier, de la différence de dilatation en longueur entre l'arbre et le boîtier, en cas d'un changement de température, de telle manière que le jeu de palier reste essentiellement constant dans une certaine plage de température, **caractérisé en ce que** l'élément de dilatation thermique est exécuté comme élément bimétallique.

2. Dispositif de palier d'arbre selon la revendication 1, **caractérisé en ce que** l'arbre est l'arbre d'entraînement d'une direction assistée électrique et qu'il porte une vis sans fin.
